# EUROPÄISCHE PATENTSCHRIFT

(11) **EP 2 493 833 B1**
(45) Veröffentlichungstag und Bekanntmachung des Hinweises auf die Patenterteilung: **26.03.2014**
(21) Anmeldenummer: 10773283.6
(22) Anmeldetag: 22.10.2010
(51) Int. Cl.: C04B 38/02

(54) **ELASTISCHER ANORGANISCH-ORGANISCHER HYBRIDSCHAUMSTOFF**
ELASTIC INORGANIC-ORGANIC HYBRID FOAM
MOUSSE HYBRIDE INORGANIQUE-ORGANIQUE ÉLASTIQUE

(30) Priorität: 27.10.2009 EP 09174186
(43) Veröffentlichungstag der Anmeldung: 05.09.2012
(73) Patentinhaber: BASF SE, 67056 Ludwigshafen (DE)
(72) Erfinder: ULANOVA, Tatiana, 67063 Ludwigshafen (DE); BAUMGARTL, Horst, 67063 Ludwigshafen (DE); HAHN, Klaus, 67281 Kirchheim (DE)
(86) Internationale Anmeldenummer: PCT/EP2010/065926
(87) Internationale Veröffentlichungsnummer: WO 2011/051170

(56) Entgegenhaltungen:
- EP-A2- 0 417 582
- WO-A1-2009/133046
- WO-A2-2008/007187
- DE-A1- 2 165 912
- DE-A1- 2 227 147
- DE-A1- 2 520 079
- DE-A1-102004 006 563
- US-A- 4 464 486

## Beschreibung

Die Erfindung betrifft ein Verfahren zur Herstellung eines elastischen Schaumstoffes, sowie den nach dem Verfahren erhältlichen Schaumstoff und dessen Verwendung.

Zur Wärmedämmung werden häufig organische Schaumstoffe auf Basis von Polystyrol, Polyolefinen oder Polyurethanen eingesetzt. Diese sind jedoch ohne Zusatz von Flammschutzadditiven verhältnismäßig leicht entflammbar und brennbar. Aufgrund ihrer meist geschlossenzelligen Struktur weisen sie eine schlechte Schallabsorption auf.

Baustoffe aus anorganischen Leichtpartikeln, wie Perlit und Vermiculit oder Alkalisilikaten sind bekannt. Zum verkleben der Partikel werden im allgemeinen anorganische Bindemittel eingesetzt, wie Zement, Ton oder Kalk. Die Stoffe zeichnen sich zwar durch günstige brandtechnische Eigenschaften aus, die Dichte ist jedoch im Allgemeinen zu hoch (100 -1000 g/I), dass sie infolge ihrer hohen Wärmeleitzahl als Wärmedämmstoffe keinen großen Effekt haben (z.B. DE 2630834). Bei Verringerung der Bindemittelmenge erhält man zwar niedrigere Dichten, doch nimmt dann die mechanische Festigkeit sehr stark ab. Es ist auch schon vorgeschlagen worden (DE1159840) organische Bindemittel, wie Asphalt, Bitumen, Stärke oder auch Polyvinylalkohol und Acrylpolymerisate zu verwenden. Solche Baustoffe haben zwar ein gutes Wärmeisolationsvermögen, erfüllen aber nicht den Anforderungen nach Nichtbrennbarkeit (EN ISO 1182 oder EN ISO 1716).

Aufgrund ihrer chemischen Zusammensetzung besitzen Melamin-Formaldehyd-Schaumstoffe bereits günstige Brandeigenschaften. Zur Verbesserung der Brandeigenschaften wird das Zellgerüst von offenzellige Melaminharzschaumstoffen beispielsweise mit einem Ammoniumsalz (EP-A 1 146 070) oder Natriumsilikat (WO 2007/023118) imprägniert.

In DE-A 21 65 912 ist ein Verfahren zur Herstellung von Schaumstoffen beschrieben, bei dem wässrige Silikatlösungen zusammen mit säureabspaltenden Härtern mit Hilfe von flüchtigen organischen Treibmitteln verschäumt und gehärtet werden. Die Dichte der offenzelligen Schaumstoffe variiert zwischen 20 und 900 g/l.

Die DE-A 32 44 523 beschreibt die Herstellung von Ortschäumen, wobei eine Alkalisilikatlösung mit einer Härterlösung und einem flüssigem Treibgas unter Druck vermischt wird. Als Härter werden säureabspaltende Carbonsäureester eingesetzt.

Aus der DE 22 27 147 A1 und DE 25 20 079 A1 sind anorganisch-organische Kunststoffe und Schaumstoffe hoher Festigkeit, Elastizität, Wärmeformbeständigkeit und Schwerentflammbarkeit bekannt, welche durch Vermischen einer wässrigen, kolloidalen Silikatlösung mit einem organischen Präpolymeren mit endständigen Isocyanatgruppen oder durch Reaktion eines Gemisches aus wässrigem Kieselsol und organischem Polyisocyanat erhältlich sind.

Die US 4,464,486 beschreibt ein Verfahren zur Herstellung eines anorganischorganischen Schaumstoffes durch Verschäumen einer Mischung von 5 - 60 Gew.-% einer wässrigen Alkalimetallsilikat- oder Ammoniumsilikatlösung, eines wasserlösclichen Acrylpolymeren sowie Treibmittel und Emulgator und Härten bei Raumtemperatur.

Die US 3,737,332 beschreibt einen geschlossenzelligen Schaumstoff hoher Dichte, der durch Einblasen von Luft in eine Tonerdeaufschlämmung und anschließendes Trocknen und Calcinieren bei Temperaturen im Bereich von 540 bis 1500°C erhalten werden kann. Die Geschlossenzelligkeit wird durch die Stabilisierung der Tonerdeaufschlämmung durch Fettsäureamide erreicht. Um die Tonpartikel zu in den Zellwänden zu fixieren und den Schaumstoff stabiler zu machen, wird anschließend bei hohen Temperaturen calciniert.

Die vorgenannten anorganischen Schaumstoffe auf Silikat-Basis sind naturgemäß schwer entflammbar. Sie weisen jedoch in der Regel eine relativ hohe Dichte und Sprödigkeit und schlechte Schallabsorptionseigenschaften auf.

Die WO 03/018476 beschreibt einen elastischen anorganischen Schaumstoff mit einer Dichte von weniger als 25 kg/m³ auf Basis eines Alumosilikats mit einem Molverhältnis SiO₂ : Al₂O₃ von 20 : 1 bis 1 : 1. Der hohe Salzanteil führt bei Herstellung zu Kettenabbruchreaktionen und die mechanische Stabilität ist jedoch noch nicht ausreichend. Die Reißdehnung liegt für den Schaumstoff unter 1 %.

Die WO 2007/048729 beschreibt einen natriumarmen Silikatschaumstoffe mit einer Dichte von weniger als 25 kg/m³ zur Wärme- oder Schalldämmung. Der offenzellige Schaumstoff wird durch Vermischen einer Dispersion von SiO₂-Partikel, welche einen mittleren Partikeldurchmesser im Bereich von 1 bis 100 nm aufweisen, mit einem Tensid und einem Treibmittel bei Temperaturen unterhalb von 50°C und Verschäumen der Mischung durch Erwärmen auf eine Temperatur im Bereich von 60 bis 100°C oder durch Druckentspannung erhalten. Die mechanische Stabilität des Schaumstoffs wird durch einen Sinterprozess bei Temperaturen über 200°C erzieht.

In der WO 2008/000623 wird vorgeschlagen, zur Verbesserung der Verschäumbarkeit eine Teilverseifung von kolloidalen SiO₂-Partikeln mit Alkalimetallhydroxid durchzuführen.

Anorganische flexible Schaumstoffe niedriger Dichte sind aufgrund ihrer hohen Temperaturstabilität, Nichtbrennbarkeit und geringen leichflüchtigen Anteilen für viele Anwendungen interessant. Die bisher vorgeschlagenen Schaumstoffe zeigen jedoch für viele Anwendungen noch nicht die gewünschte Elastizität.

Die DE 10 2004 006 563 A1 beschreibt ein Verfahren zur Herstellung organisch - anorganischer Hybridschaumstoffe bei dem ein amorphes Alumosilikat mit einem Tensid unter Zusatz einer organischen Siliciumverbindung verschäumt und mit einer Alkisilikatlösung als Härter für das Alumosilikat gehärtet wird. Als Schäummittel werden Peroxide oder Aluminium verwendet. Die Hybridschäume sollen eine verringerte Wasseraufnahme, erhöhte Abriebfestigkeit und bessere Schallabsorption zeigen.

Die WO 2008/007187 beschreibt einen Hybridmaterial aus einem geschäumten Polymer, insbesondere Polyurethan und einem anorganischen Bindemittel wie Gips oder Zement mit guter thermischer und akustischer Isolationswirkung, Wasserdampfdurchlässigkeit, gutem Brandverhalten und guter Haftung auf Beton und Mörtel.

Der Erfindung lag also die Aufgabe zugrunde, einen nichtbrennbaren Schaumstoff bereitzustellen, der sich neben guten Wärme- und Schallabsorptionseigenschaften durch eine verbesserte Elastizität auszeichnet und somit leicht handhabbar und verarbeitbar ist. Des Weiteren sollte das Verfahren zur Herstellung des Schaumstoffes eine ausreichende mechanische Festigkeit auch ohne energieaufwendigen Sinterschritt ermöglichen.

Demgemäß wurde ein Verfahren zur Herstellung eines Schaumstoffes durch Verschäumen einer Mischung, enthaltend

| | |
|---|---|
| 50 bis 97 Gew.-%, | bevorzugt 60 bis 80 Gew.-%, besonders bevorzugt 40 bis 70 Gew.-% eines Minerals A), ausgewählt aus REA Gips, Kaolin und Wollastonit |
| 1 bis 45 Gew.-%, | bevorzugt 1 bis 15 Gew.%, besonders bevorzugt 2 bis 8 Gew.-% eines in Wasser gelösten Polyvinylamin B) |
| 1 bis 50 Gew.-%, | bevorzugt 5 bis 40 Gew.-%, besonders bevorzugt 20 bis 35 Gew.-% eines Treibmittels C) |
| 1 bis 5 Gew.-%, | bevorzugt 2 bis 3 Gew.% eines Emulgators D) |
| 0 bis 5 Gew.-%, | bevorzugt 0,1 bis 1 Gew.-% ein mit dem Polyvinylamin B) reaktionsfähigen Vernetzers E) |

gefunden. Die Gewichtsprozente der in Wasser gelösten oder dispergierten Komponenten A) und B) beziehen sich auf den Feststoff dieser Komponenten.

Ein bevorzugtes Verfahren zur Herstellung des erfindungsgemäßen Schaumstoffes umfasst die Stufen:
(a) Herstellen einer Suspension aus dem Mineral A) und der wässrigen Lösung des Polymeren B),
(b) Zugabe eines Treibmittels C) und eines Emulgators D), und Dispergieren des Treibmittels
(c) Zugabe eines mit dem Polyvinylamin B) reaktionsfähigen Vernetzers E),
(d) Verschäumen der nach Stufe (c) erhaltenen Mischung durch Erwärmen auf eine Temperatur im Bereich von 35 bis 100°C oder durch Druckentspannung.

Erfindungsgemäß werden alsmineralien A) REA Gips, Kaolin oder Wollastonit eingesetzt. Die Mineralien wirken als Füllstoff und unterstützen die Keramisierung .

Das Polyvinylamin B) ist wasserlöslich und wird in Form einer wässrigen Lösung, bevorzugt in einer Konzentration von mindestens 50 g/l, insbesondere mindestens 100 g/l eingesetzt.

Bevorzugte Treibmittel C) sind flüchtige organische Verbindungen, wie z.B. Kohlenwasserstoffe, halogenierte Kohlenwasserstoffe, Alkohole, Ether, Ketone und Ester. Besonders bevorzugt sindC₄-C₈-Kohlenwasserstoffe, insbesondere Butan, Pentan oder Hexan. Die Treibmittel werden bevorzugt in Mengen von 1 bis 40, insbesondere 5 bis 25 Gew.-%, bezogen auf die Feststoffe, eingesetzt.

Zur Emulgierung des Treibmittels und zur Stabilisierung des Schaums ist der Zusatz eines Emulgators oder eines Emulgatorgemisches D) erforderlich. Als Emulgator D) können anionische, kationische, nichtionische oder amphotereTenside verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Tenside kommen Alkyltriammoniumsalze, Alkylbenzyldimethylammoniumsalze und Alkylpyridiniumsalze zum Einsatz. Die Emulgatoren werden vorzugsweise in Mengen von 0,1 bis 5 Gew.-%, bezogen auf die SiO₂-Partikel, zugesetzt.

Als Vernetzer E) eignen sich alle mit dem wasserlöslichen Polyvinylamin B) reaktionsfähigen Verbindungen. Das wasserlösliche Polyvinylamin B) und der Vernetzer E) werden bevorzugt so ausgewählt, dass die Reaktionsdauer bei der Verschäumtemperatur bis zum vollständigen Umsatz im Bereich von 1 bis 30 Sekunden liegt.

Bevorzugt werden als Vernetzer E) Aldehyde, Isocyanate, Epoxide, Acrylate, Acrylamide, Ester, Divinylsolfanate, besonders bevorzugt Ethandial, eingesetzt.

Für einen guten Brandschutz sollte der Anteil an organischen Bestandteilen in dem anorganischen-organischen Hybridschaumstoff möglichst gering sein. Bevorzugt sind Schaumstoffe, bei denen der Anteil an organischen Bestandteilen so gering ist, dass sie den Brandtest A2 nach DIN 4102 bestehen und einen Feuerwiderstand F30 aufweisen. Die Summe der Feststoffanteile des wasserlöslichen Polymeren B) und des Vernetzers E) liegt daher bevorzugt im Bereich von 1 bis 15 Gew.-%, besonders bevorzugt im Bereich von 2 bis 8 Gew.-%, bezogen auf den Schaumstoff. Die erfindungsgemäßen Schaumstoffe emittieren im Brandfall keine Rauchgase und zeigen keinen Schrumpf.

Die zu verschäumende Mischung kann weiterhin übliche Zusatzstoffe, wie z.B. Pigmente und Füllstoffe enthalten. Zur Anfärbung der Silikatstruktur können z.B. Metalloxide, etwa von Eisen, Kupfer, Chrom, Mangan, Cobalt, Nickel, Selen oder der seltenen Erden verwendet werden. Zur Verbesserung der thermischen Isolierwirkung können IR-Absorber und/oder Reflektoren, z.B. Cerverbindungen zugesetzt werden. Der Zusatz von Boroxid, Boraten, Phosphaten oder Aluminiumoxiden kann zur Optimierung der thermischen, elektrischen oder mechanischen Eigenschaften des Tonmineralgerüsts erfolgen.

Zur besseren Verschäumbarkeit können viskositätssteigernde Additiven, z.B. Stärke, modifizierte Zellulosen oder Polyvinylalkohol zugesetzt werden.

Das Treibmittel wird in Stufe (b) bevorzugt bei Temperaturen unterhalb von 50°C, besonders bevorzugt bei Temperaturen im Bereich von 10 bis 30°C in der Mischung dispergiert.

Das Verschäumen der aus Stufe (c) erhaltenen Mischung kann in Stufe (d) durch Erwärmen auf eine Temperatur im Bereich von 35 bis 100°C, vorzugsweise im Bereich von 60 bis 90°C erfolgen. Das Erwärmen bzw. Erhitzen kann mit üblichen Methoden durchgeführt werden, z.B. mit Heizschrank, Heißluft oder Mikrowelle. Die Mikrowelle ist bevorzugt, weil sie eine besonders homogene und schnelle Erwärmung bzw. Erhitzung ermöglicht.

Bei einer anderen Ausführungsform wird die Mischung in Stufe (d) durch Druckentspannung verschäumt. Dadurch kommt es zur Expansion des Treibmittels und es bildet sich ebenfalls ein fester Schaum. Die Druckminderung beinhaltet auch, dass die Mischung unter einem Druck P1 durch eine Düse auf einen Druck P2<P1 entspannt wird, wobei P1>1 bar ist. Bei diesen Ausführungsformen ist eine Erwärmung zum Zweck der Schäumung nicht zwingend nötig.

Zur Verbesserung der mechanischen Stabilität kann der Schaumstoff mit einer Lösung von Alkoxysilanen behandelt werden.

Zur Erhöhung der mechanischen Stabilität, kann der Schaumstoff nach Stufe (d) bei 100 bis 140°C getrocknet und in einer nachfolgenden Stufe (e) bei einer Temperatur oberhalb 500°C, bevorzugt im Bereich von 550-800°C versintert werden. Aufgrund der Verwendung des wasserlöslichen Polymeren B) und des Vernetzers E) als organischen Komponenten muss der erhaltene Schaumstoff nicht notwendigerweise gesintert werden.

Anschließend an Stufe (e) kann der erhaltene elastische anorganische Schaumstoff mit einer für Glasfasern üblichen Schlichte, beispielsweise Silanen, imprägniert werden. Diese Nachbehandlung kann zu einer Verbesserung der mechanischen Stabilität durch Senkung der Kerbschlaganfälligkeit führen. Die Imprägnierung kann auch mit einer erhöhten Konzentration des Vernetzers durchgeführt werden. Die Nachvernetzung kann die mechanische Stabilität erhöhen und die Quellbarkeit senken.

Eine Nachbehandlung kann auch zur Hydrophobierung des Schaumstoffs eingesetzt werden. Bevorzugt werden hierbei hydrophobe Beschichtungsmittel eingesetzt, die eine hohe Temperaturstabilität und eine geringe Brennbarkeit aufweisen, beispielsweise Silikone, Silikonate oder fluorierte Verbindungen.

Bei dem beschriebenen Verfahren entstehen Schaumstoffblöcke bzw. -platten, die zu beliebigen Formen zurechtgeschnitten werden können.

Die Dichte des Schaumstoffs beträgt in der Regel 10 bis 1000 kg/m³, bevorzugt weniger als 100 kg/m³, besonders bevorzugt liegt sie im Bereich von 5 bis 50 kg/m³.

Der nach dem erfindungsgemäßen Verfahren erhältliche Schaumstoff hat bevorzugt eine offenzellige Struktur mit einer Offenzelligkeit, gemessen nach DIN ISO 4590, von mehr als 50 %, insbesondere mehr als 80 %.

Der mittlere Porendurchmesser liegt bevorzugt im Bereich von 10 bis 1000 µm, insbesondere im Bereich von 50 bis 500 µm.

Der erfindungsgemäße Schaumstoff zeichnet sich durch hohe Elastizität, eine Reißdehnung von über 5%, eine Querzugfestigkeit von über 50% aus, erfüllt den Brandtest A2 und zeigt einen Feuerwiderstand F30.

Der nach dem erfindungsgemäßen Verfahren erhältliche Schaumstoff kann auf vielfältige Weise zur Wärme- und Schalldämmung im Bauwesen und im Automobilbau eingesetzt werden, beispielsweise zur Wärmedämmung im Hausbau oder als schalldämmendes Material, z. B. im Motorraum, in Automobilen, Flugzeugen, Bahnen, Schiffen, etc. Vorzugsweise liegen Anwendungsfelder in Bereichen, die eine hohe Temperaturstabilität und geringe Entflammbarkeit voraussetzen, z.B. in Porenbrennern. Geeignet ist das Material auch zur Isolierung im Umfeld starker Strahlung, die organische Materialien langfristig zersetzt, beispielsweise in Atomkraftwerken.

Des Weiteren eignet sich der nach dem erfindungsgemäßen Verfahren erhältliche Schaumstoff auch in Anwendungen, in denen offenzellige Aminoplastschaumstoffe eingesetzt werden, beispielsweise für feuerfeste Textilien, Polster, Matratzen, Filter und Katalysatorträger. Er weist eine Tieftemperaturelastizität vergleichbar mit offenzelligen Aminoplastschaumstoffen auf. Als Poliermittel zeichnet er sich durch eine höhere Härte und Abrasivität für sehr harte Flächen aus.

### Beispiele:

### Eingesetzte Tonmineralien:

### REA-GIPS:

### Kaolin:

### Beispiel 1:

Zu 85 g REA-Gips wurden 5g HD Zement, 37,5 g einer wässrigen Polyvinylalkohol Lösung (Mowiol 4/98), 37,5 g einer wässrigen Polymerlösung auf Basis von Vinylamin und N-Vinylformamid (Feststoffgehalt 10 Gew.-%) und 15g einer wässrigen Stärke Lösung (Feststoffgehalt 10 Gew.-%) gegeben. Danach wurden 1,5 g eines nichtionischen Tensids auf Basis von Alkylpolyglucosid gelöst und 20 g Pentan durch intensives Rühren dispergiert. Anschließend wurde 0,06 g Ethandial zugegeben. Durch Erwärmen im Trockenschrank auf ca. 80°C entstand ein Schaumstoffblock. Nach anschließender Trocknung bei 100°C hatte der elastische Schaumstoff eine Dichte von 40 g/l und zeigte eine hohe mechanische Festigkeit und Reißdehnung.

### Beispiel 2:

Zu 30 g REA-Gips wurden 10 g einer wässrigen Polyvinylalkohol Lösung (Mowiol 4/98), 20 g einer wässrigen Polymerlösung auf Basis von Vinylamin und N-Vinylformamid (Feststoffgehalt 10 Gew.-%) gegeben. Danach wurden 0,5 g eines nichtionischen Tensids auf Basis von Alkylpolyglucosid gelöst und 5 g Pentan durch intensives Rühren dispergiert. Anschließend wurde 0,02 g Ethandial zugegeben. Durch Erwärmen im Trockenschrank auf ca. 80°C entstand ein Schaumstoffblock. Nach anschließender Trocknung bei 100°C hatte der elastische Schaumstoff eine Dichte von 30 g/l und zeigte eine hohe mechanische Festigkeit und Reißdehnung.

### Beispiel 3:

Zu 30 g REA-Gips wurden 30 g einer wässrigen Polymerlösung auf Basis von Vinylamin und N-Vinylformamid (Feststoffgehalt 10 Gew.-%) gegeben. Danach wurden 0,5 g eines nichtionischen Tensids auf Basis von Polyalkylenoxidmethylsiloxan Copolymer gelöst und 5 g Pentan durch intensives Rühren dispergiert. Anschließend wurde 0,04 g Ethandial zugegeben. Durch Erwärmen im Trockenschrank auf ca. 80°C entstand ein Schaumstoffblock. Nach anschließender Trocknung bei 100°C hatte der elastische Schaumstoff eine Dichte von 30 g/l und zeigte eine hohe mechanische Festigkeit und Reißdehnung.

### Beispiel 4:

Zu 27,5 g Kaolin wurden 30 g einer wässrigen Polymerlösung auf Basis von Vinylamin und N-Vinylformamid (Feststoffgehalt 10 Gew.-%) gegeben. Danach wurden 0,5 g eines nichtionischen Tensids auf Basis von auf Basis von Alkylpolyglucosid gelöst und 5 g Pentan durch intensives Rühren dispergiert. Anschließend wurde 0,04 g Ethandial zugegeben. Durch Erwärmen im Trockenschrank auf ca. 80°C entstand ein Schaumstoffblock. Nach anschließender Trocknung bei 100°C hatte der elastische Schaumstoff eine Dichte von 30 g/l und zeigte eine hohe mechanische Festigkeit und Reißdehnung.

## Patentansprüche

1. Verfahren zur Herstellung eines Schaumstoffes durch Verschäumen einer Mischung, enthaltend
| | |
|---|---|
| 50 bis 97 Gew.-% | eines Minerals A), ausgewählt aus REA Gips, Kaolin und Wollastonit, |
| 1 bis 45 Gew.-% | eines in Wasser gelösten Polyvinylamin B), |
| 1 bis 50 Gew.% | eines Treibmittels C), |
| 1 bis 5 Gew.-% | eines Emulgators D), |
| 0 bis 5 Gew.% | eines mit dem Polyvinylamin B) reaktionsfähigen Vernetzers E), |
wobei sich die Gewichtsprozente von den Komponenten A) und B) auf Feststoff beziehen und die Summe aus A) bis E) 100 Gew.-% ergeben.

2. Verfahren nach Anspruch 1, **dadurch gekennzeichnet, dass** es die folgenden Stufen umfasst:
(a) Herstellen einer Suspension aus dem Mineral A) und der wässrigen Lösung des Polyvinylamin B),
(b) Zugabe eines Treibmittels C) und eines Emulgators D) und Dispergieren des Treibmittels,
(c) Zugabe eines mit dem Polyvinylamin B) reaktionsfähigen Vernetzers E),
(d) Verschäumen der nach Stufe (c) erhaltenen Mischung durch Erwärmen auf eine Temperatur im Bereich von 35 bis 100°C oder durch Druckentspannung.

3. Verfahren nach Anspruch 1 oder 2, **dadurch gekennzeichnet, dass** als Emulgator D) ein Alkylpolyglucosid, Alkylethersulfat oder Alkyletherphosphat eingesetzt wird.

4. Verfahren nach einem der Ansprüche 1 bis 3, **dadurch gekennzeichnet, dass** als Treibmittel C) ein C₄-C₈-Kohlenwasserstoff eingesetzt wird.

5. Verfahren nach einem der Ansprüche 1 bis 4, **dadurch gekennzeichnet, dass** als Vernetzer E) ein Dialdehyd eingesetzt wird.

6. Verfahren nach einem der Ansprüche 2 bis 5, **dadurch gekennzeichnet, dass** der Suspension aus Mineral A) und der wässrigen Lösung des Polyvinylamin B) Stärke oder modifizierte Zellulose zugesetzt wird.

7. Verfahren nach einem der Ansprüche 1 bis 6, **dadurch gekennzeichnet, dass** die Summe der Feststoffanteile des Polyvinylamin B) und des Vernetzers E) im Bereich von 1 bis 30 Gew.%, bezogen auf den Schaumstoff, liegt.

8. Schaumstoff, erhältlich nach einem Verfahren gemäß Anspruch 1 bis 7.

9. Schaumstoff nach Anspruch 8, **dadurch gekennzeichnet, dass** er eine Dichte von weniger als 50kg/m³ aufweist.

10. Schaumsstoff nach Anspruch 8 oder 9, **dadurch gekennzeichnet, dass** er eine Offenzelligkeit nach DIN ISO 4589 von mehr als 50 % aufweist.

11. Verwendung des Schaumstoffes nach einem der Ansprüche 8 bis 10 zur Wärme- oder Schalldämmung.

12. Verwendung des Schaumstoffes nach einem der Ansprüche 8 bis 10 zu Reinigungszwecken oder zum Polieren.

## Claims

1. A process for the production of a foam by foaming a mixture, comprising
| | |
|---|---|
| from 50 to 97% by weight | of a mineral A), selected from FGD, gypsum, kaolin and wollastonite, |
| from 1 to 45% by weight | of a polyvinylamine B) dissolved in water |
| from 1 to 50% by weight | of a blowing agent C) |
| from 1 to 5% by weight | of an emulsifier D) |
| from 0 to 5% by weight | of a crosslinking agent E) reactive with the polyvinylamine B), |
the percentages by weight of the components A) and B) being based on solid and the sum of A) to E) being 100% by weight.

2. The process according to claim 1, wherein it comprises the following stages:
(a) preparation of a suspension from the mineral A) and the aqueous solution of the polyvinylamine B),
(b) addition of a blowing agent C) and of an emulsifier D) and dispersing of the blowing agent,
(c) addition of a crosslinking agent E) reactive with the polyvinylamine B),
(d) foaming of the mixture obtained after stage (c) by warming to a temperature in the range from 35 to 100°C or by depressurization.

3. The process according to claim 1 or 2, wherein emulsifier D) used is an alkylpolyglucoside, alkyl ether sulfate or alkyl ether phosphate.

4. The process according to any of claims 1 to 3, wherein blowing agent C) used is a C₄-C₈-hydrocarbon.

5. The process according to any of claims 1 to 4, wherein crosslinking agent E) used is a dialdehyde.

6. The process according to any of claims 2 to 5, wherein starch or modified cellulose is added to the suspension of mineral A) and of the aqueous solution of the polyvinylamine B).

7. The process according to any of claims 1 to 6, wherein the sum of the proportions of solid of polyvinylamine B) and of crosslinking agent E) is in the range from 1 to 30% by weight, based on the foam.

8. A foam obtainable by a process according to claims 1 to 7.

9. The foam according to claim 8, wherein it has a density of less than 50 kg/m³.

10. The foam according to claim 8 or 9, wherein it has a proportion of open cells according to DIN ISO 4589 of more than 50%.

11. The use of the foam according to any of claims 8 to 10 for heat or sound insulation.

12. The use of the foam according to any of claims 8 to 10 for cleaning purposes or for polishing.

## Revendications

1. Procédé pour la production d'une mousse par transformation en mousse d'un mélange contenant
| | |
|---|---|
| 50 à 97 % en poids | d'une matière minérale A), choisie parmi le gypse de désulfuration, le kaolin et la wollastonite, |
| 1 à 45 % en poids | d'une polyvinylamine B) dissoute dans de l'eau, |
| 1 à 50 % en poids | d'un agent d'expansion C), |
| 1 à 5 % en poids | d'un émulsifiant D), |
| 0 à 5 % en poids | d'un agent de réticulation E) réactif avec la polyvinylamine B), |
les pourcentages en poids des composants A) et B) se rapportant à la matière solide et la somme de A) à E) étant égale à 100 % en poids.

2. Procédé selon la revendication 1, **caractérisé en ce qu'**il comprend les étapes suivantes :
(a) préparation d'une suspension de la matière minérale A) et de la solution aqueuse de la polyvinylamine B),
(b) addition d'un agent d'expansion C) et d'un émulsifiant D) et dispersion de l'agent d'expansion,
(c) addition d'un agent de réticulation E) réactif avec la polyvinylamine B),
(d) transformation en mousse du mélange obtenu selon l'étape (c), par chauffage jusqu'à une température dans la plage de 35 à 100 °C ou par détente de la pression.

3. Procédé selon la revendication 1 ou 2, **caractérisé en ce qu'**on utilise comme émulsifiant D) un alkylpolyglucoside, alkyléthersulfate ou alkyléther-phosphate.

4. Procédé selon l'une quelconque des revendications 1 à 3, **caractérisé en ce qu'**on utilise comme agent d'expansion C) un hydrocarbure en C₄-C₈.

5. Procédé selon l'une quelconque des revendications 1 à 4, **caractérisé en ce qu'**on utilise comme agent de réticulation E) un dialdéhyde.

6. Procédé selon l'une quelconque des revendications 2 à 5, **caractérisé en ce qu'**à la suspension de matière minérale A) et à la solution aqueuse de la polyvinylamine B) on ajoute de l'amidon ou de la cellulose modifiée.

7. Procédé selon l'une quelconque des revendications 1 à 6, **caractérisé en ce que** la somme des proportions de matière solide de la polyvinylamine B) et de l'agent de réticulation E) se situe dans la plage de 1 à 30 % en poids, par rapport à la mousse.

8. Mousse, pouvant être obtenue conformément à un procédé selon l'une quelconque des revendications 1 à 7.

9. Mousse selon la revendication 8, **caractérisée en ce qu'**elle présente une densité de moins de 50 kg/m³.

10. Mousse selon la revendication 8 ou 9, **caractérisée en ce qu'**elle présente une proportion de cellules ouvertes selon DIN ISO 4589 de plus de 50 %.

11. Utilisation de la mousse selon l'une quelconque des revendications 8 à 10, pour l'isolation thermique ou phonique.

12. Utilisation de la mousse selon l'une quelconque des revendications 8 à 10 à des fins de nettoyage ou pour le polissage.
